# EUROPÄISCHE PATENTANMELDUNG

(11) **EP 1 692 989 A1**
(43) Veröffentlichungstag der Anmeldung: **23.08.2006**
(21) Anmeldenummer: 06000366.2
(22) Anmeldetag: 10.01.2006
(51) Int. Cl.: A47J 47/20

(54) **Einbaumodul für eine Küchenarbeitsplatte mit verschiebbarem Auflagelement**

(30) Priorität: 16.02.2005 DE 102005006935
(71) Anmelder: NIRO-PLAN AG, 4663 Aarburg (CH)
(72) Erfinder:
(74) Vertreter: Petersen, Frank

(57) **Zusammenfassung**

Die Erfindung betrifft eine Kombination eines Einbaumoduls für eine Küchenarbeitsplatte, das einen Auflagerand aufweist, mit dem es auf der Küchenarbeitsplatte aufliegt, mit einem entlang des Auflagerandes und damit des Einbaumodules verschiebbaren Auflageelementes, insbesondere einem Schiebebrett, das auf seiner Unterseite mit Führungselementen versehen ist, die an dem Auflagerand angreifen.

Um ein größeres Schiebebrett zu ermöglichen wird vorgeschlagen, dass das Auflageelement das Einbaumodul übergreift und dass die Führungselemente auf der Unterseite des Auflageelementes dann an den nach außen gerichteten Seiten des Auflagerandes angreifen.

## Beschreibung

Die Erfindung betrifft eine Kombination eines Einbaumodules für eine Küchenarbeitsplatte, das einen Auflagerand aufweist, mit dem es auf der Küchenarbeitsplatte aufliegt und der sich zumindest abschnittweise über die Küchenarbeitsplatte erhebt, mit einem entlang des Auflagerandes und damit des Einbaumodules verschiebbaren Auflageelement, das auf seiner Unterseite mit Führungselementen versehen ist, die an dem Auflagerand angreifen.

Unter Einbaumodulen der hier beschriebenen Art sind Kochmodule oder Einbauspülen zu verstehen. Insbesondere die Einbauspülen bestehen dabei vorzugsweise aus Edelstahl, sie können aber auch aus Keramik bestehen oder aus Kunststoff, der gegebenenfalls auch Zuschläge enthält wie Gesteinsmehl o. ä.

Diese Einbaumodule werden in Ausschnitte von Küchenarbeitsplatten eingesetzt, wobei der Auflagerand die Kante des Ausschnittes überragt, so dass das Einbaumodul mit diesem Auflagerand benachbart zu der Kante des Ausschnittes auf der Küchenarbeitsplatte aufliegt.

Es ist dabei bekannt, dass der Auflagerand flächenbündig in die Oberseite der Küchenarbeitsplatte übergeht. Hierzu ist allerdings entlang der Kante des Ausschnittes in der Küchenarbeitsplatte auf deren Oberseite eine Ausfräsung vorzusehen, die in ihrer Höhe dem in ihr zu liegenden Auflagerand entspricht. Dies erfordert einen erheblichen Fertigungsaufwand.

Auch deswegen wird der Auflagerand häufig so ausgeführt, dass er ohne eine derartige Ausfräsung auf die Oberfläche der Küchenarbeitsplatte aufliegt und sich damit zumindest abschnittweise über die Küchenarbeitsplatte erhebt.

Der Auflagerand dient damit auch in geringerem Umfang als "Schwallrand", durch den Spritzwasser im Inneren dieses Randes gehalten wird, so dass es nicht ohne weiteres auf die Arbeitsplatte spritzt.

Da gemäß mehreren Studien insbesondere die Küchenspüle als Hauptarbeitsplatz bei Küchenarbeiten anzusehen ist, ist es allgemein bekannt, für Küchenspülen auf diesen verschiebbare Schiebebretter vorzusehen. Diese haben den Vorteil, dass z. B. Schneidarbeiten oder ähnliche Arbeiten zur Speisenzubereitung im Spülenbereich nicht freihändig ausgeführt werden müssen und auch nicht auf dem üblicherweise mit einer Riffelung versehenen Abtropfbereich einer Spüle. Auch ein Beckenboden, der zwar üblicherweise eben aber aufgrund seiner Absenkung ergonomisch ungünstiger ist, muss dann nicht als Schneid- bzw. Arbeitsfläche benutzt werden.

Derartige Schiebebretter können auch aus Kunststoff oder Holz sein. Sie werden in letzter Zeit aber häufiger auch aus Glas hergestellt. Die bekannten Schiebebretter stützen sich dabei üblicherweise auf den innerhalb des Auflagerandes vorhandenen Spiegelbereich einer Spüle ab, der das Becken und gegebenenfalls auch den Abtropfbereich umgibt.

Für die Verschiebung der derart bekannten Schiebebretter wird der Auflagerand der Spüle dabei häufig als Führungsschiene benutzt, die insbesondere in eine korrespondierende Nut eingreift, die an der Unterseite des Schiebebretts als Führungselement eingearbeitet ist. Dies hat aber den Nachteil, dass auf der Innenseite des Randes sich häufig Flüssigkeit und damit gegebenenfalls auch Schmutz befindet, der auf diese Weise in die Nut auf der Unterseite des Schiebebrettes gelangt und dort zu einer Verschmutzung führt, die als Grundlage für unerwünschtes Bakterienwachstum dienen kann.

Andererseits ist es auch bekannt, entsprechende Schiebebretter mit Füßen zu versehen, die sich auf der Innenseite des Randes abstützen und durch den Auflagerand geführt werden.

Derartige Schiebebretter haben aber auch den Nachteil, dass sie relativ klein sind: Die Kanten des Schiebebrettes können nicht sehr weit von den Füßen beabstandet sein, da sonst ein Druck auf diese Kante, wie er im normalen Küchenalltag auftreten kann, zu einem unerwünschten Hochkippen des Schiebebrettes führt. Unter diesem Gesichtspunkt ist die Größe der bekannten Schiebebretter im Wesentlichen auch durch die Breite der Küchenspüle beschränkt.

Aufgabe der vorliegenden Erfindung ist es nun, eine Möglichkeit anzugeben, das Schiebebrett größer auszuführen. Dies führt zu einer ergonomischen Verbesserung, da für Schneidarbeiten oder ähnliche Küchenarbeiten dann mehr Raum zur Verfügung steht.

Diese Aufgabe wird erfindungsgemäß dadurch gelöst, dass das erfindungsgemäß vorgesehene Auflageelement, insbesondere in Form eines Schiebebrettes, das Einbaumodul (also insbesondere eine Küchenspüle) übergreift, so dass die Führungselemente auf der Unterseite des Auflageelementes an den nach außen gerichteten Seiten des Auflagerandes des Einbaumoduls angreifen.

Diese Erfindung hat den Vorteil, dass das Auflagerelement (insbesondere in Form eines Schneidbrettes) sich insbesondere neben dem Einbaumodul direkt auf der Küchenarbeitsplatte abstützt. Damit kann das gleiche Auflageelement bei verschiedensten Spülen verwand werden, solange diese die gleiche Außenbreite haben. Die bei verschiedenen Designs unterschiedlichen Breiten von Auflagerändern müssen somit nicht beachtet werden, was bisher auch dazu geführt hat, dass die Austauschbarkeit von Schiebebrettern als spezielle Beispiele für Auflageelemente zwischen unterschiedlichen Spülen beschränkt war.

Außerdem wird durch die Abstützung des Auflageelementes auf der Küchenarbeitsplatte verhindert, dass beim Verschieben eines Auflageelementes die besonders empfindliche Oberfläche zum Beispiel von Edelstahlspülen verkratzt wird, wie dies bereits bei den bisher bekannten Auflageelementen passieren konnte.

Bei einer besonders bevorzugten Ausführungsform wird das Auflageelement im Wesentlichen rechteckig ausgebildet und weist an einer Ecke eine Einbuchtung auf.

Aufgrund der Einbuchtung ist es möglich, die an diese Einbuchtung angrenzende Seitenkante des Auflageelementes an einer Armatur vorbeizubewegen, die üblicherweise im Spiegelbereich einer Spüle angebracht wird. Diese Kante kann damit oberhalb eines Beckens zu liegen kommen, so dass es ohne weiteres möglich ist, über diese Kante hinweg geschnittenes Gut in dieses Becken hineinzugeben, beispielsweise auch in ein Gefäß, das unterhalb dieser Kante in das Becken eingestellt ist.

Wie bereits diskutiert ist ein Auflageelement vorzugsweise als Schneidbrett ausgeführt, wobei die vorgesehenen Fixierelemente in diesem Fall als an diesem befestigte Kunststofffüße ausgebildet sein sollen.

Es ist aber auch im Rahmen der Erfindung als Auflageelement ein Gitter, ein Tablar o. ä. zu verwenden.

Separat ausgebildete Füße sind bei all diesen zum einen optisch ansprechend und lassen sich auch fertigungstechnisch gut realisieren.

Vorzugsweise ist ein solches Auflageelement aus Glas gefertigt. Ein solches Auflageelement ist nicht nur optisch ansprechend sondern ist auch leicht zu reinigen und somit sehr pflegeleicht.

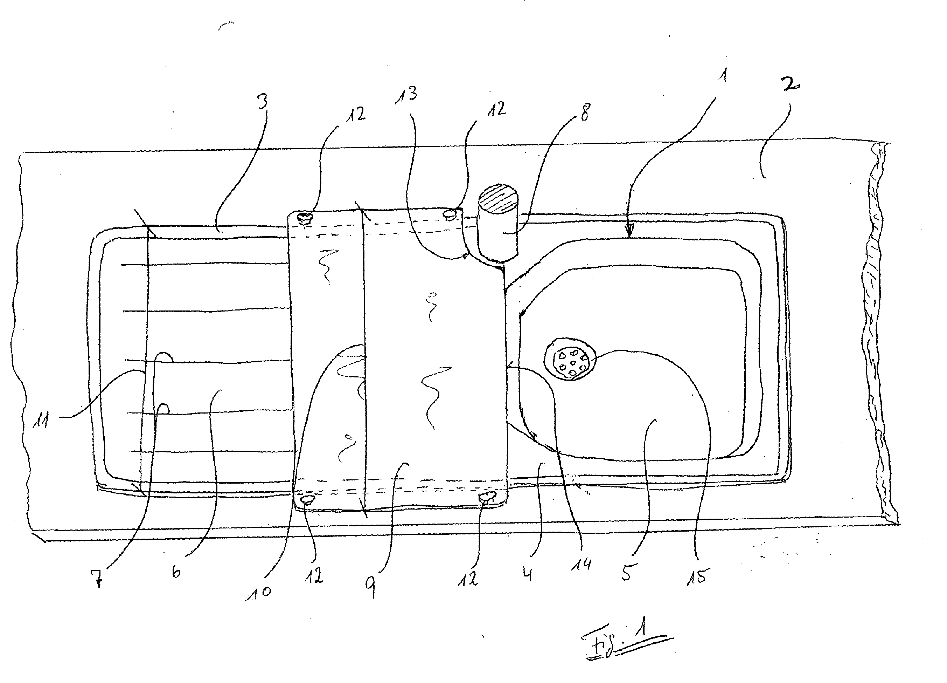

Weitere Vorteile und Merkmale der Erfindung ergeben sich aus der nachfolgenden Beschreibung eines Ausführungsbeispiels. Dabei zeigt
- Figur 1: die Prinzipskizze einer erfindungsgemäßen Kombination in perspektivischer Darstellung.

In Figur 1 erkennt man eine Küchenspüle 1, die als Einbaumodul in eine Küchenarbeitsplatte 2 eingesetzt ist. Hierzu wird in die Küchenarbeitsplatte 2 ein Ausschnitt eingebracht, in die die Küchenspüle 1 in bekannter Weise eingesetzt wird. Dabei kommt die Küchenspüle 1 mit einem umlaufenden Auflagerand 3 auf der Oberseite der Küchenarbeitsplatte 2 zu liegen und überragt diese um wenige Millimeter.

Anstelle einer Küchenspüle könnte als Einbaumodul auch ein entsprechendes Kochmodul oder Kochfeld mit umlaufendem Rand im Rahmen dieser Erfindung zum Einsatz kommen. Dies wird im folgenden aber nicht weiter erörtert.

Der Auflagerand 3 umgibt eine Spiegelfläche 4, in die ein Becken 5 eingeformt ist. Seitlich neben dem Becken 5 befindet sich noch eine Abtropffläche 6, die mit Riffeln 7 versehen ist, wobei auch diese Abtropffläche von dem Auflagerand 3 umgeben ist.

Auf der Spiegelfläche 4 ist außerdem eine Wasserzulaufarmatur 8 befestigt, von der hier lediglich der Ansatzstutzen dargestellt ist.

Entlang der Spüle 3 ist im hier dargestellten Beispiel als Auflageelement ein Schiebebrett 9 verschiebbar, das im hier dargestellten Beispiel aus Glas besteht.

Dieses Schiebebrett hat eine Länge 10, die größer ist als die Breite 11 der Küchenspüle 1. Auf seiner Unterseite weist das Schiebebrett 9 Kunststofffüße 12 auf, mit denen es sich die Küchenspüle 1 übergreifend auf der Küchenarbeitsplatte 2 abstützt. Dabei greifen die Kunststofffüße 12 als Führungselemente auf ihren der Küchenspüle 1 zugewandten Seite an den nach außen gerichteten Seiten des Auflagerandes 3 an.

Das Schiebebrett 9 kann so geführt entlang der Spüle 1 verschoben werden.

Als Besonderheit weist das hier dargestellte Schiebebrett 9, das im Wesentlichen rechteckig ausgebildet ist, an einer Ecke eine Einbuchtung 13 auf. Durch diese ist es möglich, die hier rechts dargestellte Seitenkante 14, die an die Einbuchtung angrenzt, an der Armatur 8 vorbei bis über das Becken 5 zu schieben, so dass von der Oberseite des Schiebebrettes 9 direkt auf dem Brett geschnittenes Gut in das Becken 5 gegeben werden kann oder aber in ein in dem Becken 5 befindliches Gefäß.

Aufgrund der Füße 12 hat die Unterseite des Schiebebrettes 9 auch einen Abstand von der Spiegelfläche 4. Es ist somit auch möglich, das Schiebebrett 9 über einen auf der Spiegelfläche 4 befindlichen Betätigungsknebel hinwegzuschieben, mit dem ein Verschluss für den Abfluss 15 des Beckens 5 betätigt wird.

## Patentansprüche

1. Kombination eines Einbaumodules (1) für eine Küchenarbeitsplatte (2), das einen Auflagerand (3) aufweist, der sich zumindest abschnittweise über die Küchenarbeitsplatte (2) erhebt,
mit einem entlang des Auflagerandes (3) und damit des Einbaumodules (1) verschiebbaren Auflageelement (9), das auf seiner Unterseite mit Führungselementen (12) versehen ist, die an dem Auflagerand (3) angreifen,
**dadurch gekennzeichnet,**
**dass** das Auflageelement (9) das Einbaumodul (1) übergreift, so dass die Führungselemente (12) an den nach außen gerichteten Seiten des Auflagerandes (3) angreifen.

2. Kombination gemäß Anspruch 1,
**dadurch gekennzeichnet,**
**dass** das Auflageelement (9) im Wesentlichen rechteckig ist und an einer Ecke eine Einbuchtung (13) aufweist.

3. Kombination gemäß Anspruch 1,
**dadurch gekennzeichnet,**
**dass** das Auflageelement (9) ein Schiebebrett ist und die Führungselemente als an diesem befestigte Kunststofffüße (12) ausgebildet sind.

4. Kombination gemäß Anspruch 1,
**dadurch gekennzeichnet,**
**dass** das Auflageelement (9) aus Glas ist.

5. Auflageelement für eine Kombination gemäß einem oder mehreren der vorstehenden Ansprüche.
